# EUROPEAN PATENT SPECIFICATION

(11) **EP 3 986 132 B1**
(45) Date of publication and mention of the grant of the patent: **09.07.2025**
(21) Application number: 21753869.3
(22) Date of filing: 11.02.2021
(51) Int. Cl.: A01N 43/40, A01N 25/00, A01P 7/04, A01P 21/00

(54) **METHOD OF IMPROVING PLANT GROWTH**
VERFAHREN ZUR VERBESSERUNG DES PFLANZENWUCHSES
PROCÉDÉ D'AMÉLIORATION DE LA CROISSANCE DE PLANTES

(30) Priority: 12.02.2020 IN 202021006144
(43) Date of publication of application: 27.04.2022
(60) Divisional application: 24191873.9
(73) Proprietor: UPL Limited, Mumbai, 400051 (IN)
(72) Inventor: NARAYANASAMY, Rajapandian Ramanathan, Mumbai 400051 (IN); NAGANUR, Sunil, Mumbai 400051 (IN); ANNADURAI, Prabhu, Mumbai 400051 (IN)
(74) Representative: Page White Farrer
(86) International application number: PCT/IB2021/051104
(87) International publication number: WO 2021/161201

(56) References cited:
- EP-A1- 0 580 374
- CN-A- 105 265 429
- CN-A- 105 265 429
- CN-A- 107 114 374
- CN-A- 110 876 382
- US-A1- 2004 023 801
- US-A1- 2008 312 295
- US-A1- 2008 312 295
- US-A1- 2019 059 372
- US-A1- 2019 313 646
- ANON.: "Flonicamid 50 WG", 6 December 2019 (2019-12-06), pages 1 - 33, XP055932465, Retrieved from the Internet <URL:https://www3.epa.gov/pesticides/chem_search/ppls/071512-00009-20190612.pdf> [retrieved on 20220617]
- SHIMAT V. JOSEPH: "Effects of insecticides on Protaphorura fimata (collembola: poduromorpha: onychiuridae) feeding on germinating lettuce", J. ENTOMOL. SCI., vol. 52, no. l, 2017, pages 68 - 81, XP055847088
- CHANDI SINGH, KAUR ANUREET: "Manage the menace of aphids on celery", INT. J. ADV. RES. BIOL. SCI., vol. 2, no. 10, 2015, pages 16 - 20, XP055884797
- KANSAGARA SURBHI, D. SHAH KALPIT, R. RATHOD ATUL, K. GHELANI MITESH, F. ACHARYA MAHESH: "Bio-efficacy of different insecticides against thrips (Scirtothrips dorsalis Hood) in green gam", CURR. AGRI. RES., vol. 6, no. 3, 2018, pages 365 - 371, XP055847096

## Description

### FIELD OF INVENTION

The present invention provides a method of increasing the germination rate of a seed by contacting the seed with an effective amount of flonicamid that improves the germination rate of the seed as compared to a seed not contacted with flonicamid.

### BACKGROUND OF THE INVENTION

An insecticide is a substance used to kill insects. They include ovicides and larvicides used against insect eggs and larvae, respectively.

Flonicamid (N-cyanomethyl-4-trifluoromethylnicotinamide), a pyridinecarboxamide compound, is a systemic insecticide with selective activity against hemipterous pests, such as aphids and whiteflies, and thysanopterous pests. Flonicamid is very active against aphids, regardless of differences in species, stages and morphs. It disrupts insect chordotonal organs that can affect hearing, balance, movement to cause cessation of feeding, but the specific target site of the chemical is unknown. It is typically sold as wettable granules mixed with water before spraying. Flonicamid is a known insecticide. It has been used alone or in combination with various other agents to control the insect's population in plant.

CN102696589B patent discloses flonicamid water dispersible granules that are effective against insects.

CN105265429B patent discloses flonicamid composition in combination with safener.

Similarly, there are many references that mention the combination of flonicamid and other agents as insecticide or bio-control agent.

The killing of pest is never the only objective to improve the agriculture output and agricultural practices. Increase in yield, vigour, reduced phytotoxicity are some of the other aspects that are important for the agricultural produce. To obtain these results, the insecticides and other chemical pesticides are applied along with fertilizers, PGRs and other agents. These agents though provide the desired results but at the same time alter the soil health and also harm the environment. These additional agents also cause more monetary burden on farmers.

Thus, there is a continuous need for finding novel ways to improve plant growth, an increased resistance and increased vitality of the plants. There is also a further need to reduce the planting shock to plants for achieving the same results as stated above. There is a further need for the reduction of fertilizers and other chemical agents for achieving sustainable agricultural practices.

US 2019/0059372 A1 discloses the use of one or more isoflavonoid compound Signals applied prior to planting, either directly to the seed or transplant of a non-legume crop or a legume crop, or applied to the soil that will be planted either to a non-legume crop or a legume crop, for the purpose of increasing yield and/or improving seed germination and/or improving earlier seed emergence and/or improving nodulation and/or increasing crop stand density and/or improving plant vigour and/or improving plant growth, and/or increasing biomass, and/or earlier fruiting.

### SUMMARY OF THE INVENTION

The present invention provides a method for increasing the germination rate of a seed, according to claim 1. The method comprises contacting the seed with an effective amount of flonicamid that improves the germination rate of the seed as compared to a seed not contacted with flonicamid.

In an embodiment, the method of the invention comprises contacting the seed with the flonicamid at an application rate of 0.1 µg/seed to 100 mg/seed.

Additional features and advantages of the present invention will be apparent from the detailed description that follows.

### BRIEF DESCRIPTION OF THE DRAWINGS

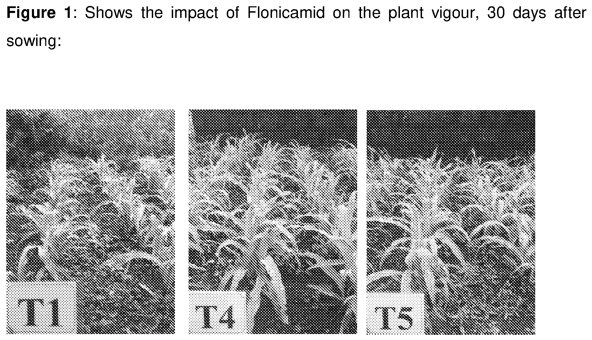

Fig. 1 shows the impact of flonicamid on plant vigour 30 days after sowing.

### DETAILED DESCRIPTION

As used herein, the terms "comprising" "including," "having," "containing," "involving," and the like are to be understood to be open-ended, i.e., to mean including but not limited to. The terms "preferred" and "preferably" refer to embodiments of the invention that may afford certain benefits, under certain circumstances.

In any aspect or embodiment described hereinbelow, the phrase comprising may be replaced by the phrases "consisting of" or "consisting essentially of" or "consisting substantially of". In these aspects or embodiment, the composition described includes or comprises or consists of or consists essentially of or consists substantially of the specific components recited therein, to the exclusion of other ingredients or excipients not specifically recited therein.

The term 'plant' refers to all physical parts of a plant, including seeds, seedlings, saplings, roots, tubers, stems, stalks, foliage and fruits. The term plant includes transgenic and non-transgenic plants.

The term "locus" of a plant as used herein is intended to embrace the place on which the plants are growing, where the plant propagation materials of the plants are sown or where the plant propagation materials of the plants will be placed into the soil.

The term "plant propagation material" is understood to denote generative parts of a plant, such as seeds, vegetative material such as cuttings or tubers, roots, fruits, tubers, bulbs, rhizomes and parts of plants, germinated plants and young plants which are to be transplanted after germination or after emergence from the soil. These young plants may be protected before transplantation by a total or partial treatment by immersion.

The inventor of the present invention surprisingly found that when a seed coated with flonicamid was planted, the plant showed an unexpected increase in the germination as well as enhanced growth of the plant indicating improved vigour. Hitherto, flonicamid has not been recommended for being used for seed treatment. Therefore, these advantages accruing from this use of flonicamid was unexpected and surprising.

The present invention provides a method for increasing the germination rate of a seed, according to claim 1. The method comprises contacting the seed with an effective amount of flonicamid that improves the germination rate of the seed as compared to a seed not contacted with flonicamid.

The present disclosure provides a method comprising applying flonicamid to a locus of plant growth or intended plant growth. A suspension concentrate or an emulsifiable concentrate formulation of flonicamid may be used.

The method may provide an improved plant growth. The improved plant growth obtained employing the method of this disclosure includes increased root length, increased shoot length and increased seedling weight, relative to plants which have not been so treated. In another aspect, the present method is useful for plant growth in the absence of insect pest pressure that include situations in which insect pests are not present in the growth area of a plant, as well as situations where such insect pests are present within the area of growth of a plant but in a quantity which is not harmful to the plant and which does not interfere with the growth of the plant.

It was surprising to observe improved plant vigor when flonicamid was applied to either the plant, or to the plant propagation material, or to the locus of the plant growth or intended plant growth.

The method of the present invention improves the germination or growth of the plant propagation material when flonicamid is applied to said plant propagation material. The plant propagation material is a seed.

In an aspect, the method of the present disclosure provides an enhanced greening to the plant.

Therefore, in this aspect, the disclosure provides a method for enhancing greening in crop plants, the method comprising applying flonicamid to the plant or to the plant propagation material thereof, or to the locus of plant or its intended plant growth.

Preferred plants which may be treated in the process described herein include brassicas, such as broccoli, Chinese broccoli, Brussels sprouts, cauliflower, Cavalo broccoli, kohlrabi, cabbage, Chinese cabbage and Chinese mustard cabbage; cilantro; coriander; corn, cucurbits, such as chayote, Chinese waxgourd, citron melon, cucumber, gherkin, gourd, muskmelons (including cantalope, casaba, crenshaw melon, golden pershaw melon, honeydew melon, honey balls, mango melon, Persian melon, pineapple melon, Santa Claus melon and snake melon), pumpkins, summer squash, winter squash and watermelon; dried beans and peas, including bean, field bean, kidney bean, lima bean, pinto bean, navy bean, tepary bean, adzuki bean, blackeyed pea, catjang, cowpea, crowder pea, moth bean, mung bean, rice bean, southern pea, urd bean, broad bean, chickpea, guar, lablab bean, lentil, pea, field pea and pigeon pea; eggplant; lettuce; leafy brassicas/turnip greens including broccoli raab, bok choy, collards, kale, mizuna, mustard spinach, rape greens and turnip greens; okra; peppers; sod; soybeans; spinach; succulent peas and beans including pea, dwarf pea, edible-pod pea, English pea, garden pea, green pea, snow pea, sugar snap pea, [ppigeon pea, bean, broadbean, lima bean, runner bean, snap bean, wax bean, asparagus bean, yardlong bean, jackbean and sword bean; tobacco; tomatoes; and tuberous and corm vegetables including potato, sweet potato, arracacha, arrowroot, Chinese artichoke, Jerusalem artichoke, edible canna, cassava, chayote, chufa, dasheen, ginger, leren, tanier, turmer, yam bean and true yam.

The plant propagation material is a seed.

It was further surprising that the growth rate of the plant or of the plant propagation material was enhanced when flonicamid was applied to the plant propagation material.

In the practice of the present invention, the flonicamid may be employed in the form of technical material or in the form of any standard agriculturally acceptable formulation thereof. In an embodiment flonicamid is coated on the seed in the form of a suspension concentrate, emulsifiable concentrate or any other suitable liquid formulation that can coat the seed or plant or plant propagation material.

Example of such agrochemical formulations include suspension concentrate (SC), emulsifiable concentrate (EC), flowable concentrate (FS), Microemulsion (ME), Oil Dispersion (OD), Suspoemulsion (SE) and the like.

In an embodiment, a suspension concentrate (SC) formulation of flonicamid may be used.

In preferred embodiment, a flowable suspension (FS) formulation of flonicamid may be used.

In an embodiment the formulation includes non-ionic surfactant and an anionic surfactant.

In an embodiment of the present invention, non-ionic surfactant is selected from the group comprising nonionic surfactants such as polyalkyleneoxide siloxanes, ethoxylated derivatives of fatty alcohols, alkyl glucosides, alkyl phenols, polyalkylene glycol ethers and condensation products of alkyl phenols, amines, fatty acids, fatty esters, mono-, di-, or triglycerides, various block copolymeric surfactants derived from alkylene oxides such as ethylene oxide/propylene oxide, aliphatic amines or fatty acids with ethylene oxides and/or propylene oxides such as the ethoxylated alkyl phenols or ethoxylated aryl or polyaryl phenols, carboxylic esters solubilized with a polyol or polyvinyl alcohol/polyvinyl acetate copolymers, polyvinyl alcohol, polyvinyl pyrrolidinones and acrylic acid graft copolymers and mixtures, reaction products, and/or copolymers thereof.

In a preferred embodiment, non-ionic surfactant of surfactant mix is selected from the group comprising nonionic surfactants such as various block copolymeric surfactants derived from alkylene oxides such as ethylene oxide/propylene oxide, aliphatic amines or fatty acids with ethylene oxides and/or propylene oxides such as the ethoxylated alkyl phenols or ethoxylated aryl or polyaryl phenols, their mixtures, reaction products, and/or copolymers thereof.

In an embodiment, the composition comprises from about 0.1 % to about 50 % w/w and preferably from about 1 % to about 40 % w/w non-ionic surfactant of the total weight of the agrochemical composition.

In an embodiment, anionic surfactant is selected from the group comprising alkyl and aryl sulfates and sulfonates, including sodium alky] sulfates, sodium mono- and di-alkyl naphthalene sulfonates, sodium alpha-olefin sulfonate, lignin and its derivatives (such as lignosulfonate salts), sodium alkane sulfonates, polyoxyalkyene alkylether sulfate, polyoxyalkylene alkylaiyl ether sulfates, polyoxyalkylene styrylphenyl ether sulfate, mono- and di- alkylbenzene sulfonates, alkylnaphthalene sulfonate, alkylnaphthalene sulfonate formaldehyde condensate, alkyl diphenylether sulfonates, olefme sulfonates, alkylphosphates, polyoxyalkylene alkyl phosphates, polyoxyalkylene phenylether phosphate, polyoxyalkylphenol phosphates, poly-carboxylates, fatty acids and salts thereof, alkyl glycinates, sulfonated methyl esters, sulfonated fatty acids, sulfosuccinates and their derivatives, acyl glutamates, acyl sarcosinates, alkyl sulfoacetates, acylated peptides, alkyl ether carboxylates, acyl lactylates, anionic fluorosurfactants, amid ether sulfates, N-methyl fatty acid taurides, mixtures thereof and the like, including sodium, potassium, ammonium and amine salts, etc. or mixtures thereof.

In a preferred embodiment, anionic surfactant is selected from the group comprising alkyl and aryl sulfates and sulfonates, including sodium alkyl sulfates, sodium mono- and di-alkyl naphthalene sulfonates, lignin and its derivatives (such as lignosulfonate salts), polyoxyalkyene alkylether sulfate, alkylnaphthalene sulfonate, alkylnaphthalene sulfonate formaldehyde condensate.

In an embodiment, the composition comprises from about 0.1 % to about 50 % w/w and preferably from about 1 % to about 40 % w/w anionic surfactant of the total weight of composition.

In an embodiment the composition may further comprise one or more antifreeze agent, wetting agents, fillers, surfactants, anticaking agents, pH-regulating agents, preservatives, biocides, antifoaming agents, colorants and other formulation aids.

Suitable antifreeze agents that can be added to the agrochemical composition are liquid polyols, for example ethylene glycol, propylene glycol or glycerol.

Wetting agents that can be added to the agrochemical composition include, but are not limited to: polyarylalkoxylated phosphate esters and their potassium salts (e.g., Soprophor^{®} FLK, Stepfac TSP PE- K. Other suitable wetting agents include sodium dioctylsulfosuccinates (e.g., Geropon^{®} SDS, Aerosol^{®} OT) and ethoxylated alcohols (e.g., Trideth-6; Rhodasurf^{®} BC 610; Tersperse^{®} 4894).

Optionally, about 0.1 wt % to about 5.0 wt % of antifoaming or defoamers are employed to stop any unwanted foam generated while manufacturing highly concentrated liquid biocide dispersion composition. The preferred antifoaming agent is selected from the group of silicone-based compounds, alcohols, glycol ethers, mineral spirits, acetylene diols, polysiloxanes, organosiloxanes, siloxane glycols, reaction products of silicon dioxide and organosiloxane polymer, polydimethylsiloxanes or polyalkylene glycols alone or in combination. Defoamers that are suitable include SAG-10; SAG-1000AP; SAG-1529; SAG-1538; SAG-1571; SAG-1572; SAG-1575; SAG-2001; SAG-220; SAG-290; SAG-30; SAG-30E; SAG-330; SAG-47; SAG-5440; SAG-7133 and SAG-770.

Examples of thickening agents based on anionic heteropolysaccharides from the xanthan gum group are inter alia the Rhodopol 23^{®}, Rhodopol G^{®}, Rhodopol 50 MD^{®}, Rhodicare T^{®}, Kelzan^{®}, Kelzan S^{®} and Satiaxane CX91^{®}.

Preservatives used may be benzisothiazolinone (Proxel GXL) or phonols, 2-bromo-2-nitropropane-1,3-diol (Bioban BP 30), 5-chloro-2-methyl-4-isothiazolin-3-one & 2 methyl-4-isothiazolin -3 one (Kathon CG/ICP),Glutaraldehyde (Ucarcide 50), Chloromethylisothiazolinone (CMIT)/Methylisothiazolinone (MIT) (Isocil Ultra 1.5), 2.2-dibromo-3-nitrilopropioamide (Reputain 20), Natamycin & Nisin, Bronopol/CMIT/MIT (Mergal 721K3).

Suitable colorants (for example in red, blue and green) are, preferably, pigments, which are sparingly soluble in water, and dyes, which are water-soluble. Examples are inorganic coloring agents (for example iron oxide, titanium oxide, and iron hexacyanoferrate) and organic coloring agents (for example alizarin, azo and phthalocyanin coloring agents).

Fillers may include an organic or inorganic solid inert substance such as talc, clay, diatomaceous earth, magnesium aluminum silicate, white carbon black, pyrophyllite, light calcium carbonate, high clay, organic bentonite, etc. or mixtures thereof.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse, or increased shoot growth, or earlier germination, or combination of these factors, or other advantages known to a skilled person, by a measurable or noticeable amount over the same factor of the plant produced under the same conditions, but without the application of the subject method.

In an aspect, the method of the present disclosure provides any one, or more than one, or all of these advantages by applying flonicamid to either the plant, or to the plant propagation material, or to the locus of plant growth or intended plant growth. In accordance with the invention, the method is for increasing the germinatioin rate of a seed and comprises contacting the seed with an effective amount of flonicamid that improves the germination rate of the seed as compared to a seed not contacted with flonicamid.

Particularly, when it is said that the present method is capable of "improving the yield and/or vigour" of a plant, the present method results in an increase in either the yield, as described above, or the vigor of the plant, as described above, or both the yield and the vigor of the plant.

As used herein, an 'improvement in plant vigour' means that certain traits are improved qualitatively or quantitatively when compared with the same trait in a control plant which has been grown under the same conditions in the absence of the method of the present disclosure. Such traits include, but are not limited to, early and/or improved germination, improved emergence, the ability to use less seeds, increased root growth, a more developed root system, increased root nodulation, increased shoot growth, increased tillering, stronger tillers, more productive tillers, increased or improved plant stand, less plant verse (lodging), an increase and/or improvement in plant height, an increase in plant weight (fresh or dry), bigger leaf blades, greener leaf colour, increased pigment content, increased photosynthetic activity, earlier flowering, longer panicles, early grain maturity, increased seed, fruit or pod size, increased pod or ear number, increased seed number per pod or ear, increased seed mass, enhanced seed filling, less dead basal leaves, delay of senescence, improved vitality of the plant, increased levels of amino acids in storage tissues and/or less inputs needed (e.g. less fertiliser, water and/or labour needed). A plant with improved vigour may have an increase in any of the aforementioned traits or any combination or two or more of the aforementioned traits.

As used herein, an 'improvement in plant quality' means that certain traits are improved qualitatively or quantitatively when compared with the same trait in a control plant which has been grown under the same conditions in the absence of the method of the present disclosure. Such traits include, but are not limited to, improved visual appearance of the plant, reduced ethylene (reduced production and/or inhibition of reception), improved quality of harvested material, e.g. seeds, fruits, leaves, vegetables (such improved quality may manifest as improved visual appearance of the harvested material) and the like.

The compositions of present disclosure may be applied to the locus of the plant on one or more occasions during the growth of the plant. It can be applied to the planting site before the seed is sown, during the sowing of the seed, preemergence and/or post-emergence. The compositions can also be used while the plant is being grown in a green house and the use can be continued after transplantation. The soil may, for example, be treated directly, prior to transplanting, at transplanting or after transplanting. The use of the compositions can be via any suitable method, which ensures that the agents penetrate the soil, for example, nursery tray application, in furrow application, soil drenching, soil injection, drip irrigation, application through sprinklers or central pivot, incorporation into soil (broad cast or in band) are such methods.

The treatment of the plants and plant parts with the active compound or its compositions is carried out directly or by action on their surroundings, habitat or storage space using customary treatment methods, for example by dipping, spraying, atomizing, irrigating, evaporating, dusting, fogging, broadcasting, foaming, painting, spreading-on, watering (drenching), drip irrigating and, in the case of propagation material, in particular in the case of seeds, furthermore as a powder for dry seed treatment, a solution for seed treatment, a water-soluble powder for slurry treatment, by incrusting, by coating with one or more layers, etc. It is furthermore possible to apply the active compound in combination with other active(s) by the ultra-low volume method, or to inject the active compound combination into the soil.

The rate and frequency of use of the compositions on the plant may vary within wide limits and depends on the type of use, the specific active agents, the nature of the soil, the method of application (pre- or post-emergence, etc.), the plant, the prevailing climatic conditions, and other factors governed by the method of application, the time of application and the target plant.

In an aspect, when employed in plant protection, the amount of active substance applied is in the range, depending on the kind of effect desired, from 0.001 to 10 kg per ha, preferably from 0.001 to 5 kg per ha or 0.001 to 2 kg per ha preferably from 0.005 to 1 kg per ha, in particular from 0.005 to 0.5 kg per ha.

Accordingly, the rates of application of flonicamid may vary, according to type of crop, the specific active ingredient, the number of active ingredients, type of plant propagation material but is such that the active ingredient(s) is in an effective amount to provide the desired action (such as disease or pest control) and can be determined by trials.

In an embodiment, for seed treatment, application rates of flonicamid can vary from 0.1 µg to 100mg, preferably 0.5 µg to 50mg, more preferably 1 µg to 10mg, especially 0.1 to 2 mg, of a. i./seed.

Preferably, the amount of pesticide or other ingredients used in the seed treatment should not inhibit generation of the seed, or cause phytotoxic damage to the seed.

In an embodiment, the seed which is treated with flonicamid is selected from soybean, corn, cotton or okra.

In an embodiment the present treatment is applied to paddy, transplanted rice or directly sown rice.

In an embodiment, application rate of flonicamid is from 0.2 to 1.5 mg ai/seed, especially on a cotton seed.

In an embodiment, application rate of flonicamid is from 0.2 to 1.5 mg ai/seed, especially on a corn seed.

The coating of the seed can be done by any method known in the art.

In a preferred embodiment the seed is sown or planted in the soil or pots or nurseries.

In a preferred embodiment the sowing of seed is done by line sowing.

The seed treatment composition can also comprise or may be applied together and/or sequentially with further active compounds. These further compounds can be selected from fertilizers or micronutrient donors or microorganisms or other preparations that influence plant growth, such as inoculants (e.g. a strain of nitrogen-fixing bacteria), plant inducers.

In an aspect, the method of the present disclosure increases the disease resistance in a plant or plant propagation material.

The plant propagation material treated with flonicamid in the first aspect are, therefore, resistant to disease and/or pest damage; accordingly, there is provided a pathogenic and/or pest resistant plant propagation material which is treated with flonicamid and one or further active compounds and consequently at least the active ingredients thereof are adhered on the propagation material, such a seed.

In an aspect, the present disclosure provides a plant propagation material treated with flonicamid, such that at least a portion of the applied flonicamid is adhered to the plant propagation material, wherein the plant propagation material is a seed.

Thus, in an aspect, the present disclosure provides a seed treated with flonicamid.

In another aspect, the present disclosure provides a seed treated with flonicamid, such that at least a portion of the applied flonicamid is adhered to the plant propagation material.

In an aspect, the seed may be a fruit seed or vegetable seed.

In an aspect, the choice of the selected seed is not limiting. The seed may be selected from soybean seed, orange seed, raspberries seed, broccoli seed, prune seed, corn seed, peach seed, mango seed, celery seed, conifer seed, tangerine seed, kiwifruit seed, gooseberry seed, plum seed, pumpkin seed, beet seed, starfruit seed, bean seed, carrot seed, asparagus seed, apple seed, crabapple seed, swiss chard seed, and many more.

In an aspect, the present disclosure provides a corn plant propagation material treated with flonicamid, such that at least a portion of the applied flonicamid is adhered to the corn plant propagation material, wherein the corn plant propagation material is a corn seed.

Thus, in an aspect, the present disclosure provides a corn seed treated with flonicamid.

In another aspect, the present disclosure provides a corn seed treated with flonicamid, such that at least a portion of the applied flonicamid is adhered to the corn seed.

In an aspect, the present disclosure provides a corn seed treated with flonicamid, wherein flonicamid is applied at a rate of at least 5 g per mL of flonicamid per kg of corn seed such that at least 77.5 % of the sown seeds are germinated within 5 days of sowing.

In an aspect, the present disclosure provides a corn seed treated with flonicamid, wherein flonicamid is applied at a rate of at least 5 g per mL of flonicamid per kg of corn seed such that at least 97.5 % of the sown seeds are germinated within 10 days of sowing.

In an aspect, the present disclosure provides a corn seed treated with flonicamid, wherein flonicamid is applied at a rate of at least 5 g per mL of flonicamid per kg of corn seed such that at least 97.5 % of the sown seeds are germinated within 15 days of sowing.

In an aspect, the present disclosure provides a corn seed treated with flonicamid, wherein flonicamid is applied at a rate of at least 10 g per mL of flonicamid per kg of corn seed.

In an aspect, the present disclosure provides a corn seed treated with flonicamid, wherein flonicamid is applied at a rate of at least 10 g per mL of flonicamid per kg of corn seed such that at least 82 % of the sown seeds are germinated within 5 days of sowing.

In an aspect, the present disclosure provides a corn seed treated with flonicamid, wherein flonicamid is applied at a rate of at least 10 g per mL of flonicamid per kg of corn seed such that at least 98 % of the sown seeds are germinated within 10 days of sowing.

In an aspect, the present disclosure provides a corn seed treated with flonicamid, wherein flonicamid is applied at a rate of at least 10 g per mL of flonicamid per kg of corn seed such that at least 98 % of the sown seeds are germinated within 15 days of sowing.

The present disclosure also provides a seed that is protected against multiple insect pests comprising a seed treated with composition of flonicamid. Advantageously the present compositions provide significant efficacy on insect pest and simultaneously provide improvement in plant growth.

In an aspect, the insect pest may be from Lepidopteran, Coleopteran, Hemipteran, or Homopteran species. However, the choice of the target insect pests is not limiting.

In an aspect, Lepidopteran pest species which negatively impact agriculture include, but are not limited to, *Achoea janata, Adoxophyes* spp., *Adoxophyes orana, Agrotis* spp. (cutworms), *Agrotis ipsilon* (black cutworm), *Alabama argillacea* (cotton leafworm), *Amorbia cuneana, Amyelosis transitella* (navel orangeworm), *Anacamptodes defectaria, Anarsia lineatella* (peach twig borer), *Anomis sabulifera* (jute looper), *Anticarsia gemmatalis* (velvetbean caterpillar), *Archips argyrospila* (fruittree leafroller), *Archips rosana* (rose leaf roller), *Argyrotaenia* spp. (tortricid moths), *Argyrotaenia citrana* (orange tortrix), *Autographa gamma, Bonagota cranaodes, Borbo cinnara* (rice leaf folder), *Bucculatrix thurberiella* (cotton leafperforator), *Caloptilia* spp. (leaf miners), *Capua reticulana, Carposina niponensis* (peach fruit moth), *Chilo* spp., *Chlumetia transversa* (mango shoot borer), *Choristoneura rosaceana* (obliquebanded leafroller), *Chrysodeixis* spp., *Cnaphalocerus medinalis* (grass leafroller), Colias spp., *Conpomorpha cramerella, Cossus cossus* (carpenter moth), *Crambus* spp. (Sod webworms), *Cydia funebrana* (plum fruit moth), *Cydia molesta* (oriental fruit moth), *Cydia nignicana* (pea moth), *Cydia pomonella* (codling moth), *Darna diducta, Diaphania* spp. (stem borers), *Diatraea* spp. (stalk borers), *Diatraea saccharalis* (sugarcane borer), *Diatraea graniosella* (southwester corn borer), *Earias* spp. (bollworms), *Earias insulata* (Egyptian bollworm), *Earias vitella* (rough northern bollworm), *Ecdytopopha aurantianum, Elasmopalpus lignosellus* (lesser cornstalk borer), *Epiphysias postruttana* (light brown apple moth), *Ephestia* spp. (flour moths), *Ephestia cautella* (almond moth), *Ephestia elutella* (tobacco moth), *Ephestia kuehniella* (Mediterranean flour moth), *Epimeces* spp., *Epinotia aporema, Erionota thrax* (banana skipper), *Eupoecilia ambiguella* (grape berry moth), *Euxoa auxiliaris* (army cutworm), *Feltia* spp. (cutworms), *Gortyna* spp. (stemborers), *Grapholita molesta* (oriental fruit moth), *Hedylepta indicata* (bean leaf webber), *Helicoverpa* spp. (noctuid moths), *Helicoverpa armigera* (cotton bollworm), *Helicoverpa zea* (bollworm/corn earworm), *Heliothis* spp. (noctuid moths), *Heliothis virescens* (tobacco budworm), *Hellula undalis* (cabbage webworm), *Indarbela* spp. (root borers), *Keiferia lycopersicella* (tomato pinworm), *Leucinodes orbonalis* (eggplant fruit borer), *Leucoptera malifoliella, Lithocollectis* spp., *Lobesia botrana* (grape fruit moth), *Loxagrotis* spp. (noctuid moths), *Loxagrotis albicosta* (western bean cutworm), *Lymantria dispar* (gypsy moth), *Lyonetia clerkella* (apple leaf miner), *Mahasena corbetti* (oil palm bagworm), *Malacosoma* spp. (tent caterpillars), *Mamestra brassicae* (cabbage armyworm), *Maruca testulalis* (bean pod borer), *Metisa plana* (bagworm), *Mythimna unipuncta* (true armyworm), *Neoleucinodes elegantalis* (small tomato borer), *Nymphula depunctalis* (rice caseworm), *Operophthera brumata* (winter moth), *Ostrinia nubilalis* (European corn borer), *Oxydia vesulia, Pandemis cerasana* (common currant tortrix), *Pandemis heparana* (brown apple tortrix), *Papilio demodocus, Pectinophora gossypiella* (pink bollworm), *Peridroma* spp. (cutworms), *Peridroma saucia* (variegated cutworm), *Perileucoptera coffeella* (white coffee leafminer), *Phthorimaea operculella* (potato tuber moth), *Phyllocnisitis citrella, Phyllonorycter* spp. (leafminers), *Pieris rapae* (imported cabbageworm), *Plathypena scabra, Plodia interpunctella* (Indian meal moth), *Plutella xylostella* (diamondback moth), *Polychrosis viteana* (grape berry moth), *Prays endocarpa, Prays oleae* (olive moth), *Pseudaletia* spp. (noctuid moths), *Pseudaletia unipunctata* (armyworm), *Pseudoplusia includens* (soybean looper), *Rachiplusia nu, Scirpophaga incertulas, Sesamia* spp. (stemborers), *Sesamia inferens* (pink rice stem borer), *Sesamia nonagrioides, Setora nitens, Sitotroga cerealella* (Angoumois grain moth), *Sparganothis pilleriana, Spodoptera* spp. (armyworms), *Spodoptera exigua* (beet armyworm), *Spodoptera fugiperda* (fall armyworm), *Spodoptera oridania* (southern armyworm), *Synanthedon* spp. (root borers), *Thecla basilides, Thermisia gemmatalis, Tineola bisselliella* (webbing clothes moth), *Trichoplusia ni* (cabbage looper), *Tuta absoluta, Yponomeuta* spp., *Zeuzera coffeae* (red branch borer) and *Zeuzera pyrina* (leopard moth).

In yet another aspect, the insect pests are of the order Orthoptera, such as *Anabrus simplex* (Mormon cricket), *Gryllotalpidae* (mole crickets), *Locusta migratoria, Melanoplus* spp. (grasshoppers), *Microcentrum retinerve* (angularwinged katydid), *Pterophylla* spp. (kaydids), *Schistocerca gregaria, Scudderia furcata* (forktailed bush katydid) and *Valanga nigricorni.*

In yet another aspect, the insect pests are of the order Thysanoptera, such as *Frankliniella fusca* (tobacco thrips), *Frankliniella occidentalis* (western flower thrips), *Frankliniella shultzei, Frankliniella williamsi* (corn thrips), *Heliothrips haemorrhaidalis* (greenhouse thrips), *Riphiphorothrips cruentatus, Scirtothrips* spp., *Scirtothrips citri* (citrus thrips), *Scirtothrips dorsalis* (yellow tea thrips), *Taeniothrips rhopalantennalis* and *Thrips* spp.

In an aspect Coleopteran insect pests may be selected from but not limited to *Acanthoscelides* spp. (weevils), *Acanthoscelides obtectus* (common bean weevil), *Agrilus planipennis* (emerald ash borer), *Agriotes* spp. (wireworms), *Anoplophora glabripennis* (Asian longhorned beetle), *Anthonomus* spp. (weevils), *Anthonomus grandis* (boll weevil), *Aphidius* spp., *Apion* spp. (weevils), *Apogonia* spp. (grubs), *Ataenius spretulus* (Black Turgrass Ataenius), *Atomaria linearis* (pygmy mangold beetle), *Aulacophore* spp., *Bothynoderes punctiventris* (beet root weevil), *Bruchus* spp. (weevils), *Bruchus pisorum* (pea weevil), *Cacoesia* spp., *Callosobruchus maculatus* (southern cow pea weevil), *Carpophilus hemipteras* (dried fruit beetle), *Cassida vittata, Cerosterna* spp, *Cerotoma* spp. (chrysomeids), *Cerotoma trifurcata* (bean leaf beetle), *Ceutorhynchus* spp. (weevils), *Ceutorhynchus assimilis* (cabbage seedpod weevil), *Ceutorhynchus napi* (cabbage curculio), *Chaetocnema* spp. (chrysomelids), Colaspis spp. (soil beetles), *Conoderus scalaris, Conoderus stigmosus, Conotrachelus nenuphar* (plum curculio), *Cotinus nitidis* (Green June beetle), *Crioceris asparagi* (asparagus beetle), *Cryptolestes ferrugineus* (rusty grain beetle), *Cryptolestes pusillus* (flat grain beetle), *Cryptolestes turcicus* (Turkish grain beetle), *Ctenicera* spp. (wireworms), *Curculio* spp. (weevils), *Cyclocephala* spp. (grubs), *Cylindrocpturus adspersus* (sunflower stem weevil), *Deporaus marginatus* (mango leaf-cutting weevil), *Dermestes lardarius* (larder beetle), *Dermestes maculates* (hide beetle), *Diabrotica* spp. (chrysolemids), *Epilachna varivestis* (Mexican bean beetle), *Faustinus cubae, Hylobius pales* (pales weevil), *Hypera* spp. (weevils), *Hypera postica* (alfalfa weevil), *Hyperdoes* spp. (Hyperodes weevil), *Hypothenemus hampei* (coffee berry beetle), *Ips* spp. (engravers), *Lasioderma serricorne* (cigarette beetle), *Leptinotarsa decemlineata* (Colorado potato beetle), *Liogenys futscus, Liogenys suturalis, Lissorhoptrus oryzophilus* (rice water weevil), *Lyctus* spp. (wood beetles/powder post beetles), *Maecolaspis joliveti, Megascelis* spp., *Melanotus communis, Meligethes* spp., *Meligethes aeneus* (blossom beetle), *Melolontha melolontha* (common European cockchafer), *Oberea brevis, Oberea linearis, Oryctes rhinoceros* (date palm beetle), *Oryzaephilus mercator* (merchant grain beetle), *Oryzaephilus surinamensis* (sawtoothed grain beetle), *Otiorhynchus* spp. (weevils), *Oulema melanopus* (cereal leaf beetle), *Oulema oryzae, Pantomorus* spp. (weevils), *Phyllophaga* spp. (May/June beetle), *Phyllophaga cuyabana, Phyllotreta* spp. (chrysomelids), *Phynchites* spp., *Popillia japonica* (Japanese beetle), *Prostephanus truncates* (larger grain borer), *Rhizopertha dominica* (lesser grain borer), *Rhizotrogus* spp. (Eurpoean chafer), *Rhynchophorus* spp. (weevils), *Scolytus* spp. (wood beetles), *Shenophorus* spp. (Billbug), *Sitona lineatus* (pea leaf weevil), *Sitophilus* spp. (grain weevils), *Sitophilus granaries* (granary weevil), *Sitophilus oryzae* (rice weevil), *Stegobium paniceum* (drugstore beetle), *Tribolium* spp. (flour beetles), *Tribolium castaneum* (red flour beetle), *Tribolium confusum* (confused flour beetle), *Trogoderma variabile* (warehouse beetle) and *Zabrus tenebioides.*

In an aspect, the insect pests are of the order Hemiptera, such as *Acrosternum hilare* (green stink bug), *Blissus leucopterus* (chinch bug), *Calocoris norvegicus* (potato mind), *Cimex hemipterus* (tropical bed bug), *Cimex lectularius* (bed bug), *Dagbertus fasciatus, Dichelops furcatus, Dysdercus suturellus* (cotton stainer), *Edessa meditabunda, Eurygaster maura* (cereal bug), *Euschistus heros, Euschistus servus* (brown stink bug), *Helopeltis antonii, Helopeltis theivora* (tea blight plantbug), *Lagynotomus* spp. (stink bugs), *Leptocorisa oratorius, Leptocorisa varicornis, Lygus* spp. (plant bugs), *Lygus hesperus* (western tarnished plant bug), *Maconellicoccus hirsutus, Neurocolpus longirostris, Nezara viridula* (southern green stink bug), *Paratrioza cockerelli, Phytocoris* spp. (plant bugs), *Phytocoris californicus, Phytocoris relativus, Piezodorus guildingi, Poecilocapsus lineatus* (fourlined plant bug), *Psallus vaccinicola, Pseudacysta perseae, Scaptocoris castanea* and *Triatoma* spp. (bloodsucking conenose bugs/kissing bugs).

In an aspect, the insect pests are of the order Homoptera, such as *Acrythosiphon pisum* (pea aphid), *Adelges* spp. (adelgids), *Aleurodes proletella* (cabbage whitefly), *Aleurodicus disperses, Aleurothrixus floccosus* (woolly whitefly), *Aluacaspis* spp., *Amrasca bigutella bigutella, Aphrophora* spp. (leafhoppers), *Aonidiella aurantii* (California red scale), *Aphis* spp. (aphids), *Aphis gossypii* (cotton aphid), *Aphis pomi* (apple aphid), *Aulacorthum solani* (foxglove aphid), *Bemisia* spp. (whiteflies), *Bemisia argentifolii, Bemisia tabaci* (sweet potato whitefly), *Brachycolus noxius* (Russian aphid), *Brachycorynella asparagi* (asparagus aphid), *Brevennia rehi, Brevicoryne brassicae* (cabbage aphid), *Ceroplastes* spp. (scales), *Ceroplastes rubens* (red bawax scale), *Chionaspis* spp. (scales), *Chrysomphalus* spp. (scales), *Coccus* spp. (scales), *Dysaphis plantaginea* (rosy apple aphid), *Empoasca* spp. (leafhoppers), *Eriosoma lanigerum* (woolly apple aphid), *Icerya purchasi* (cottony cushion scale), *Idioscopus nitidulus* (mango leafhopper), *Laodelphax striatellus* (smaller brown planthopper), *Lepidosaphes* spp., *Macrosiphum* spp., *Macrosiphum euphorbiae* (potato aphid), *Macrosiphum granarium* (English grain aphid), *Macrosiphum rosae* (rose aphid), *Macrosteles quadrilineatus* (aster leafhopper), *Mahanarva frimbiolata, Metopolophium dirhodum* (rose grain aphid), *Mictis longicornis, Myzus persicae* (green peach aphid), *Nephotettix* spp. (leafhoppers), *Nephotettix cinctipes* (green leafhopper), *Nilaparvata lugens* (brown planthopper), *Parlatoria pergandii* (chaff scale), *Parlatoria ziziphi* (ebony scale), *Peregrinus maidis* (corn delphacid), *Philaenus* spp. (spittlebugs), *Phylloxera vitifoliae* (grape phylloxera), *Physokermes piceae* (spruce bud scale), *Planococcus* spp. (mealybugs), *Pseudococcus* spp. (mealybugs), *Pseudococcus brevipes* (pine apple mealybug), *Quadraspidiotus perniciosus* (San Jose scale), *Rhapalosiphum* spp. (aphids), *Rhapalosiphum maida* (corn leaf aphid), *Rhapalosiphum padi* (oat bird-cherry aphid), *Saissetia* spp. (scales), *Saissetia oleae* (black scale), *Schizaphis graminum* (greenbug), *Sitobion avenae* (English grain aphid), *Sogatella furcifera* (white-backed planthopper), *Therioaphis* spp. (aphids), *Toumeyella* spp. (scales), *Toxoptera* spp. (aphids), *Trialeurodes* spp. (whiteflies), *Trialeurodes vaporariorum* (greenhouse whitefly), *Trialeurodes abutiloneus* (bandedwing whitefly), *Unaspis* spp. (scales), *Unaspis yanonensis* (arrowhead scale) and *Zulia entreriana.*

In an embodiment, the present invention provides a method of treating a corn seed with flonicamid, wherein the method comprises treating per kg of the corn seed with at least 5 g per mL of flonicamid such that at least 77.5 % of the sown seeds are germinated within 5 days of sowing.

In an embodiment, the present invention provides a method of treating a corn seed with flonicamid, wherein the method comprises treating per kg of the corn seed with at least 5 g per mL of flonicamid such that at least 97.5 % of the sown seeds are germinated within 10 days of sowing.

In an embodiment, the present invention provides a method of treating a corn seed with flonicamid, wherein the method comprises treating per kg of the corn seed with at least 5 g per mL of flonicamid such that at least 97.5 % of the sown seeds are germinated within 15 days of sowing.

In an embodiment, the present invention provides a method of treating a corn seed, wherein the method comprises treating per kg of the corn seed with at least 10 g per mL of flonicamid per kg of corn seed such that at least 82 % of the sown seeds are germinated within 5 days of sowing.

In an embodiment, the present invention provides a method of treating a corn seed, wherein the method comprises treating the corn seed with at least 10 g per mL of flonicamid per kg of corn seed such that at least 98 % of the sown seeds are germinated within 10 days of sowing.

In an embodiment, the present invention provides a method of treating a corn seed, wherein the method comprises treating per kg of the corn with at least 10 g per mL of flonicamid such that at least 98 % of the sown seeds are germinated within 15 days of sowing.

In view of the above, it will be seen that the several advantages of the invention are achieved and other advantageous results attained.

### EXAMPLES

### Example 1 (a reference example):

### Flonicamid 500 g/L Flowable Concentrate (FS)

| **#** | **Ingredients** | **Quantity (%w/w)** |
|---|---|---|
| 1 | Flonicamid | 42.5 |
| 2 | EO-PO block copolymer | 1.5 |
| 3 | Sodium lignosulphonate | 2.5 |
| 4 | Precipitate silica | 1.0 |
| 5 | Hydrotreated light paraffinic distillate | 5 |
| 6 | Propylene glycol | 8.5 |
| 7 | Organic Azo Pigment | 1.0 |
| 8 | Xanthan gum | 0.05 |
| 9 | 1,2-Benzisothiazolin-3-one | 0.10 |
| 10 | Acetic acid | 0.08 |
| 11 | Nonionic aqueous emulsion of polydimethylsiloxane | 0.2 |
| 12 | Water | QS |
| | | 100.00 |

Flonicamid, EO-PO block copolymer, sodium lignosulphonate, precipitated silica, hydrotreated light paraffinic distillate, propylene glycol, organic azo pigment, xanthan gum, 1,2-benzisothiazolin-3-one, acetic acid and nonionic aqueous emulsion of polydimethylsiloxane were mixed in water in required quantities in a homogenizer. Homogenization was carried out for 20 minutes to obtain homogenized mixture. The homogenized mixture is fed to the wet grinding mill for particle size reduction. The uniform mixture thus obtained in milling was then transferred to gellification vessel containing pre-formulated 2 % gel obtained by mixing 0.2 g xanthan gum in 10 ml water to obtain flowable suspension.

### Example 2

In this experiment the effect of flonicamid was tested on corn seeds. Treated and untreated seeds were sown to see the impact of flonicamid on the plant germination. Treatments are performed using FS formulation of Example 1. Line sowing method was used to sow the seeds.

**Table A: The impact of flonicamid on germination % of plant:**

| Effect on Germination (%) of Flonicamid | | | |
|---|---|---|---|
| | Average germination % | | |
| Treatments | 5DAS | 10DAS | 15DAS |
| T1-Control | 65 | 95 | 95 |
| Flonicamid @ 5g/ml/kg Seed | 77.5 | 97.5 | 97.5 |
| Flonicamid @ 10g/ml/kg Seed | 82.5 | 98 | 98 |

The results of the test showed that the flonicamid seed treatments provided significant improvement in germination of tested corn seeds.

### Example 3 (a reference example):

In this experiment the effect was tested on corn seeds. Treated and untreated seeds were sown to see the impact of flonicamid on the plant vigour. Line sowing method was used to sow the seeds.

**Table B: The impact of Flonicamid on Plant Vigour of plant:**

| Effect on Plant Vigor rating of Flonicamid | | | | |
|---|---|---|---|---|
| | Average Plant Vigor visual rating | | | |
| Treatments | 10DAS | 20DAS | 30DAS | 40DAS |
| T1-Control | 3 | 3 | 3 | 3 |
| T4-Flonicamid @ 5g/ml/kg Seed | 2 | 1 | 1 | 1 |
| T5- Flonicamid @ 10g/ml/kg Seed | 2 | 1 | 1 | 1 |

### Conclusion:

Enhanced germination % was observed upon seed treatment with flonicamid. The results are represented in Figure 1.

Excellent growth recorded in flonicamid treatments at 30 days after sowing than untreated control.

Further, no phytotoxicity was observed upon the treatment of seeds with flonicamid.

The above results indicate that flonicamid has direct impact in improving the germination % of seeds, crop vigour parameter of plants without causing any phytotoxic effect.

### Example 4

Evaluation of Flonicamid as Seed Treatment in Rice (DSR) on Germination and Crop Safety

**Table C**

| Treatment no | Treatments | No. of germinated seed/sq.m | | | % Germination |
|---|---|---|---|---|---|
| | Treatments | 5DAS | 10DAS | 15DAS | |
| T1 | Control | 52.6 | 57.6 | 60.3 | 80 |
| T2 | Flonicamid @ 5ml/kg Seed | 65.3 | 69.6 | 70.6 | 90 |
| T3 | Flonicamid @ 10ml/kg Seed | 70.6 | 73.3 | 78.6 | 98 |

Evaluation of Flonicamid as Seed Treatment in Rice (DSR) on Plant Height & PGE

**Table D**

| Treatment no | Treatments | Plant hight (cm) | | PGE rating | | | No. of tiller/hill | |
|---|---|---|---|---|---|---|---|---|
| | | 15DAS | 20DAS | 15DAS | 30 DAS | 45DAS | 45DAS | 60DAS |
| T1 | Control | 10.56 | 20.55 | 3 | 3 | 4 | 6.8 | 8.5 |
| T2 | Flonicamid @ 5ml/kg Seed | 12.83 | 22.45 | 2 | 2 | 3 | 13.5 | 15.3 |
| T3 | Flonicamid @ 10ml/kg Seed | 15.33 | 26.66 | 1 | 1 | 2 | 17.2 | 19.7 |

Evaluation of Flonicamid as Seed Treatment in Rice (DSR) and Influence on Rice Grain Yield

**Table E**

| Treatment no | Treatments | Rice grain yield t/ha |
|---|---|---|
| T1 | Control | 3.04 |
| T2 | Flonicamid @ 5ml/kg Seed | 4.53 |
| T3 | Flonicamid @ 10ml/kg Seed | 4.85 |

Efficacy of Flonicamid Seed Treatment on Thrips in Direct Sown Rice

**Table F**

| Treatment no | Treatments | No. of Thrips /Seedling | | |
|---|---|---|---|---|
| | Treatments | 15DAS | 20DAS | 25DAS |
| T1 | Control | 15.8 | 23.4 | 28.3 |
| T2 | Flonicamid @ 5ml/kg Seed | 4.5 | 8.3 | 12.3 |
| T3 | Flonicamid @ 10ml/kg Seed | 1.3 | 4.8 | 7.2 |

### Conclusion:

The results from this example show that all the treatments with present flonicamid seed treatment shows enhanced plant growth/germination, improvement in crop vigour parameter and better control of thrips over untreated treatments.

### Example 5

Evaluation of Flonicamid as Seed Treatment in Transplanted Rice on Germination and Crop Safety

**Table G**

| Treatment no | Treatments | No. of germinated seed/sq.m | | | % Germination |
|---|---|---|---|---|---|
| | Treatments | 5DAS | 10DAS | 15DAS | |
| T1 | Control | 80 | 90 | 94 | 88 |
| T2 | Flonicamid @ 5ml/kg Seed | 98 | 102 | 108 | 86 |
| T3 | Flonicamid @ 10ml/kg Seed | 110 | 120 | 128 | 98 |

Evaluation of Flonicamid as Seed Treatment in Transplanted Rice on Plant Height & PGE

**Table H**

| Treatment no | Treatments | Plant height (cm) | | PGE rating | | No. of tiller/hill | |
|---|---|---|---|---|---|---|---|
| | | 15DAS | 20DAS | 30 DAS | 45DAS | 45DAS | 60DAS |
| T1 | Control | 43.5 | 65.8 | 3 | 4 | 9.8 | 11.4 |
| T2 | Flonicamid @ 5ml/kg Seed | 51.5 | 72.8 | 2 | 2 | 20.8 | 22.6 |
| T3 | Flonicamid @ 10ml/kg Seed | 58.4 | 78.5 | 1 | 1 | 25.6 | 28.5 |

Efficacy of Flonicamid Seed Treatment on Thrips in Transplanted Rice

**Table I**

| Treatment no | Treatments | No. of Thrips /Seedling | | |
|---|---|---|---|---|
| | Treatments | 15DAS | 20DAS | 25DAS |
| T1 | Control | 4.8 | 10.9 | 18.4 |
| T2 | Flonicamid @ 5ml/kg Seed | 2.5 | 7.2 | 11.5 |
| T3 | Flonicamid @ 10ml/kg Seed | 1.2 | 5.6 | 9.3 |

| | | | | |
|---|---|---|---|---|
| Conclusion: All the tested products showed good control of thrips in nursery and improvement in crop vigour parameters both in nursery and main fields superior over control treatments. No phytotoxicity was observed in any of tested treatments. | | | | |

## Claims

1. A method for increasing the germination rate of a seed, comprising: contacting the seed with an effective amount of flonicamid that improves the germination rate of the seed as compared to a seed not contacted with flonicamid.

2. The method according to claim 1, wherein the method comprises contacting the seed with the flonicamid at an application rate of 0.1 µg/seed to 100 mg/seed.

## Patentansprüche

1. Verfahren zur Erhöhung der Keimrate eines Samens, umfassend: Inkontaktbringen des Samens mit einer wirksamen Menge von Flonicamid, die die Keimrate des Samens im Vergleich zu einem Samen, der nicht mit Flonicamid in Kontakt gebracht wird, verbessert.

2. Verfahren nach Anspruch 1, wobei das Verfahren ein Inkontaktbringen des Samens mit dem Flonicamid mit einer Applikationsrate von 0,1 µg/Samen bis 100 mg/Samen umfasst.

## Revendications

1. Un procédé d'amélioration du taux de germination d'une graine, consistant à : mettre en contact la graine avec une quantité efficace de flonicamide qui améliore the taux de germination de la graine, comparé à une graine qui n'est pas mise en contact avec du flonicamide.

2. Le procédé selon la revendication 1, dans lequel le procédé consiste à mettre en contact la graine avec le flonicamide à raison de 0,1 µg/graine à 100 mg/graine.
